# EUROPEAN PATENT APPLICATION

(11) **EP 3 842 482 A1**
(43) Date of publication of application: **30.06.2021**
(21) Application number: 19460069.8
(22) Date of filing: 23.12.2019
(51) Int. Cl.: C08J 11/04, B29B 17/00, C08J 5/04, C08J 5/10, B27N 3/00

(54) **ECOLOGICAL COMPOSITE MADE OF RECYCLED THERMOPLASTIC MATERIALS AND METHOD USED IN ITS PRODUCTION**

(71) Applicant: Dechnik, Maciej Adam, 64-200 Wolsztyn (PL); Matusiak, Tomasz, 66-120 Zbaszynek (PL)
(72) Inventor: Dechnik, Maciej Adam, 64-200 Wolsztyn (PL); Matusiak, Tomasz, 66-210 Zbaszynek (PL)
(74) Representative: Rozga, Blazej

(57) **Abstract**

**Summary**

The invention relates to an ecological composite resulting from the recycling of thermoplastics of polyolefin or polystyrene type preferably. Wood waste is a filler and dyes and flame retardants are additional agents. Wood in the form of wood fibbers of all origins (sawdust, wood chips, ground and chipped wood shavings, chipped wood-like panels) with the addition of glass fibre gives the plastic waste products mechanical strength, colour as well as non-flammability. The recycling of thermoplastic plastic waste as well as the utilization and improvement of wooden residues enable developing of new products, avoiding the combustion of their components.

## Description

The subject of the invention is an ecological composite obtained in the process of recycling thermoplastics, consisting in melting of various materials, including polymers from the polyolefin group mainly, forming a binding material, which is supplemented by various types of inorganic and organic fillers, dyes and flame retardants.

Materials made of thermoplastic polymers are known from the state of the art, among which products containing aggregate, sand, gravel, cement, pearlite, ash as well as fume dust form a significant group. Composites containing wood in various forms as a filler, wood-based materials, boards of various types and plywood are also a large group of inventions.

The method for obtaining binding mass from thermoplastic waste in combination with aggregate filler material of various types and granulation is known from the patent application No PL201220. Aggregate, sand, gravel undergo thermal pre-treatment at a temperature of 500-550°C. After temperature stabilization, the filling material is mixed with the binder component, which are thermoplastic polymers, preferably polyesters or polypropylene and polyethylene, optionally with the addition of a dye resistant to high temperatures.

In the patent description PL201262 an invention was described, in which synthetic textiles are filler material. The patent application CN104312183 discloses a method of producing a high strength plastic profile using fibreglass filler in which wood dust and wood chips are additionally used.

Inventions in which wood and wood-based materials are the filling material are another group. In the patent description PL232133 wooden construction building materials were obtained on the basis of a multi-layer wooden composite, in which boards from giant thuja, balsa and poplar were used.

The essence of the invention is a new composite obtained in the recycling process, in which un-purified, mixed thermoplastic waste, various types of utility and post-production waste were used as well as a method of producing a composite polymer material with organic and inorganic fillers.

According to the invention, the ecological composite for the production of various types of thermoplastic products is characterized by that it contains a binding thermoplastic material, in an amount of 20-90% by weight, heterogeneous plastics of various non-hazardous origin, preferably as a raw waste, in the form of crushed dry matter with a grain size of 3 mm. Plastics from the following groups: polypropylene - PP, polyethylene - PE, including high density polyethylene HDPE, medium density polyethylene - MDPE as well as low density polyethylene - LDPE, polyethylene terephthalate - PET, poly(methyl methacrylate) - PMMA, polyamide - PA, acrylonitrile-butadiene-styrene terpolymer - ABS, polystyrene - PS, different types of PS, styrene/acrylonitrile co-polymere - SAN, including other non mentioned thermoplastics are the main base of the binding material.

The thermoplastic mixture contains inorganic and organic fillers in an amount of 5-60% by weight of the mixture as well as additives in the form of dyes resistant to high temperatures in an amount of up to 5% by weight of the mixture and flame retardants in an amount of up to 5% by weight of the mixture depending on the way of copolymer application.

The method of producing a composite from recycled thermoplastic plastic waste - RDF, which consists of binding material, fillers, dyes and brighteners which is based on the assumption that the waste binding material resulting from blending thermoplastics of various origin is segregated and pre-grounded to a diameter of approx. 3 mm. The waste binding material, composed of waste thermoplastics of various types of plastics is combined with a filler with granulation of 0,1-8 mm, stirred and then heated in the reactor at temperature 150-290°C, depending on the type of binder component. After melting, while stirring, the components of the composite combine into a plastic mass up to the glass transition temperature called glassy temperature (Tg) or degree of main dispersion. Above the glass transition temperature Tg thermoplastics exhibit elastic and flexible properties. In these conditions the value of shear modulus decreases significantly. At this temperature range thermoplastics can be thermally formed using relatively low forces. The most important stages are as follows:
a. Blending
b. Dispersion
c. Pressing
d. Dissolving
e. Product forming or granulation

The obtained mass of the composite is extruded using single- or double-screw extruder directly into extruding die and then it is admitted on a 500-3000 mm wide calender press. The resulting strip, which is 0.5-12 mm thick, is then cooled down below the glass transition temperature.

It is also possible to form the strip into a desired shape of the product before it is cooled down, using moulds of any shape.

The following physical and mechanical effects are obtained by using the solution according to the invention:
- the composite provides very good mechanical properties of the material
- the composite is resistant to acids and another aggressive chemicals
- the composite is impermeable to water
- the composite is non-flammable
- it is an ecological product that protects natural resources
- it prevents harmful substances from entering the atmosphere, including carbon dioxide and other compounds formed during the combustion process
- it is environmentally friendly at the production stage as well as during utilization
- it provides energy saving
- does not generate production waste because mold residues or damaged and used products formed from the abovementioned plastics are suitable for reapplication.

The invention has been presented in exemplary methods for production, that do not limit materials and methods of production in the future.

### Example 1

The method of composite production based on thermoplastics and various types of wood involves that the binding thermoplastic material is a mixture of plastic waste made of polyethylene - PE and polypropylene - PP. The mixture is the basis of copolymer binding agent, which is formed as a result of blending, melting together in a reactor at 150-230°C fragmented, heterogeneous, crude non-hazardous wastes, used mainly for the production of alternative fuel RDF. Plastic waste material in an amount of 70-75% of the charge mass, resulting from segregation and pre-granulation of 3 mm diameter is combined with the filler with a granulation of 0,1-8,0 mm, mixed and heated in the reactor at 150-230°C, depending on the type of binding component and its amount in the mixture. While stirring the components of the composite, the whole melts and blends into a plastic mass up to the glass transition temperature. Humidity of the thermoplastic waste charge is in the range of 8-12%, but it should not exceed the value 15%. In the case of higher humidity it is allowed to dry the charge.

In the process of melting the charge of thermoplastic plastics, 20% of dry waste derived from wood, such as sawdust, shavings, wood dust, wood chips, bark, waste from chemical wood processing as well as 5% of glass fibre waste or glass fibre fabrics and alternatively 2-3% of dye and 0,1-1% of 10% water glass are added, forming a composite with even consistency, non-flammable and alternatively coloured. The plastic mass prepared in this way is extruded using single- or double screw extruder into extruding die and then it is admitted directly on a 500-3000 mm wide calender press, where a 10 mm thick composite strip is formed. The whole process allows to produce a high-quality composite web with high efficiency and dimensional homogeneity.

### Example 2

Plastic mass according to the embodiment No 1, while still in a plastic form is heated by means of IR lamps to a softening point at 150-200°C and in a continuous process using additional equipment based on the longitudinal profile rollers or crosswise profiling rollers is used to produce the finished product, e. g. components of transport pallets or elements of the complete transport system, geared boards, base boards, transport cases, corner beads to protect finished products or pallets with finished product.

### Example 3

A plastic mass being a mixture of plastic waste containing polyethylene - PE, polypropylene - PP and polyethylene terephthalate PET in a plastic form together with wood-like fillers at a temperature of 80-200°C is formed in a continuous process with the use of additional equipment into a granulate used in the production of other products, after re-melting the composite to a plastic form.

## Claims

1. Composite from recycled thermoplastic plastic waste - RDF, distinguished by that the waste thermoplastic binding material contains a basic polymer, constituting of one or more thermoplastic polymers, supplemented with additives/fillers affecting the physical and mechanical properties of composite.

2. Composite according to the claim 1 distinguished by that the binding thermoplastic material contains heterogeneous plastics in amount of 20-90% by weight, in the form of shredded dry matter as a raw non-hazardous waste.

3. Composite according to the claim 2, distinguished by that the binding thermoplastic material is polypropylene - PP, polyethylene - PE, including high density polyethylene HDPE, medium density polyethylene - MDPE as well as low density polyethylene - LDPE, polyethylene terephthalate - PET, poly(methyl methacrylate) - PMMA and a number of polyamides - PA.

4. Composite according to the claim 2, distinguished by that the polymers of styrene group: polystyrene - PS, styrene/acrylonitrile co-polymer - SAN, acrylonitrile-butadiene-styrene terpolymer - ABS are thermoplastic binding materials.

5. Composite according to the claim 1, distinguished by that the supplementary additives / fillers affecting the physical and mechanical properties of the composite are organic and inorganic fillers, flame retardants as well as complementary raw materials such as dyes and brighteners.

6. Composite according to the claim 5, distinguished by that the dry wood-based materials are copolymer fillers in an amount of 5-60% by weight in the form of dust, sawdust, shavings resulting from wood processing, bark, cork, shredded chipboards, MDF and HDE boards as well as shredded furniture with a grain size of 0,1-8,0 mm.

7. Composite according to the claim 5, distinguished by that the copolymer filler is shredded fibreglass waste and fibreglass fabrics in an amount of 2-10% by weight.

8. Composite according to the claim 5, distinguished by that the copolymer fillers are paper, cardboard and textiles in an amount of 1-5% by weight.

9. Composite according to the claim 5, distinguished by that the fillers are dyes and brighteners in an amount of 0-5% by weight.

10. Composite according to the claim 5, distinguished by that the fillers are flame retardants in an amount of 0-5% by weight.

11. Composite according to the claim 10, distinguished by that the flame retardant is a solution of potassium carbonate and 10% water glass.

12. A method for producing a composite from recycled thermoplastic plastic waste - RDF, consisting of binding materials, fillers, dyes and brighteners as it was defined in the claims 1-12, distinguished by that the waste binding thermoplastic material was formed as a result of the pre-grinding of the plastics defined in the claims 3-5 for granulation approximately up to 3 mm, combines with a filler with a grain size of 0,1-8,0 mm as it was defined in the claims 6-8 and is mixed and heated at 120-290°C in the reactor, depending on the type of the binder, after melting, while stirring the ingredients combine into homogeneous plastic mass above the glass transition temperature, and the composite mass obtained in this way is squeezed using extrusion die orifice directly into a 500-3000 wide calender press and a 0,5-12 mm thick strip is formed. The composite thus obtained is then subjected to a process of cooling to a temperature lower the glass transition temperature, resulting the mass to shape the product.

13. A method for producing a composite according to the claim 12, distinguished by that the high-temperature resistant dye used for plastics is added during combining of the thermoplastic binding material with the filler in order to obtain a suitable colour.

14. A method for producing a composite according to the claim 13, distinguished by that the flame retardants are added during combining of the thermoplastic binding material with the filler in order to obtain the appropriate fire resistance of the composite (preferably potassium carbonate or 10% water glass in an amount of 0,5-5% of the composite weight).

15. A method for producing a composite according to the claim 13, distinguished by that the plastic mass of the composite at a temperature of 150-290°C is formed into a chilled granulate for further processing.
